# EUROPEAN PATENT APPLICATION

(11) **EP 1 503 304 A2**
(43) Date of publication of application: **02.02.2005**
(21) Application number: 04103335.8
(22) Date of filing: 13.07.2004
(51) Int. Cl.: G06F 17/30

(54) **Method and apparatus for late binding/dynamic pathname resolution**

(30) Priority: 29.07.2003 US 630130
(71) Applicant: MICROSOFT CORPORATION, Redmond, WA 98052 (US)
(72) Inventor: Steere, David Cappers, 98004, Bellevue (US); Dewey, Brian, 98105, Seattle (US); Nagar, Rajeev, 98074, Sammamish (US); Ghotge, Mr. Visal V., Bellevue, WA washington 98007 (US)
(74) Representative: Grünecker, Kinkeldey, Stockmair & Schwanhäusser Anwaltssozietät

(57) **Abstract**

Late-binding/dynamic pathname resolution can be performed by a variable identifier operating in user or kernel mode, and a pathname engine and a data structure operating in kernel mode. The variable identifier identifies a variable in a pathname. The pathname engine evaluates the variable by converting the variable into a character string such that a path to an object file is established. The pathname engine determines a scope of potential character string values for the variable by mapping the variable to corresponding values stored in the data structure. Each variable has a well-defined scope of values because the only values available are the values selected for storage in the data structure. The mechanism for establishing values is extensible such that variable/value pairs can be implemented in the data structure at any time.

## Description

### Field of the Invention

The present invention relates to computing systems, and more particularly to pathnames identifying a location of a resource stored on a computing system.

### Background of the Invention

In computer operating systems, a pathname is a sequence of alphanumeric characters that identifies the location of a file or directory. The simplest type of pathname is the name of the file itself. The operating system looks for a file in the current working directory when the pathname is specified by the filename. If the file resides in a different directory, a path is specified such that the operating system can locate the file. The process of translating a pathname into operating system language is known as pathname resolution.

One problem with existing systems is that pathnames are essentially static. There is currently no mechanism for pathname components that are customizable or evaluated in the context of a user of the path. Once a pathname has been created, that same pathname will resolve to the same data regardless of which user is logged on, which machine the pathname resolution occurs on, or the like. This limitation has plagued computer system users and designers for some time.

A mechanism for dynamic pathname resolution has, until now, eluded those skilled in the art.

### Summary of the Invention

In accordance with one aspect of the present invention, a computer-readable medium, having computer-executable components, includes a data structure including variable/value mappings and a pathname resolver. The pathname resolver is configured to identify a variable in a pathname, to retrieve from the data structure a value associated with the identified variable, and to modify the pathname such that the variable is replaced with the value from the data structure.

In accordance with another aspect of the present invention, a computer-readable medium has computer-executable instructions. The computer-executable instructions include: receiving a pathname that includes a variable; resolving the pathname by mapping the variable to a corresponding value in a data structure; returning a handle to an object pointed to by the resolved pathname; and expanding the data structure by adding variable/value pairs to the data structure.

In accordance with yet another aspect of the present invention, a computer-readable medium is encoded with an extensible data structure. The extensible data structure includes a first field and a second field. The first field includes an identification of a variable included in a pathname. The second field includes a value for the variable. The pathname includes the value that is operable to point to an object.

In accordance with still yet another aspect of the present invention, a computer-implemented method includes: identifying a variable in a pathname provided by a component requesting access to an object; mapping the variable to a corresponding value in a data structure; modifying the pathname by replacing the variable in the pathname with the corresponding value such that the resolved pathname creates a path that points to the object; and returning to the requesting component the modified pathname.

### Brief Description of the Drawings

FIGURE 1 illustrates an exemplary computing device that may be used in one exemplary embodiment of the present invention.
FIGURE 2 is a block diagram illustrating an exemplary environment for practicing the present invention.
FIGURE 3 is a logical flow diagram of an exemplary overview of a pathname resolution process performed in accordance with the present invention.
FIGURE 4 is a logical flow diagram of an exemplary overview of a data structure expansion process performed in accordance with the present invention.

### Detailed Description of the Preferred Embodiment

Briefly stated, the present invention is related to a method and system for late-binding/dynamic pathname resolution. The pathname resolution can be performed by a variable identifier, a pathname engine, and a data structure. At the time of request for access to an object by pathname, the variable identifier identifies a variable in the pathname. The pathname engine evaluates the variable by referring to a data structure having variable/value mappings. The data structure may be stored in the context of the current user. The pathname engine modifies the pathname by replacing the variable in the pathname with its corresponding value from the data structure and returns the modified pathname.

The invention will be described here first with reference to one example of an illustrative computing environment in which embodiments of the invention can be implemented. Next, a detailed example of one specific implementation of the invention will be described. Alternative implementations may also be included with respect to certain details of the specific implementation. It will be appreciated that embodiments of the invention are not limited to those described here.

### Illustrative Operating Environment

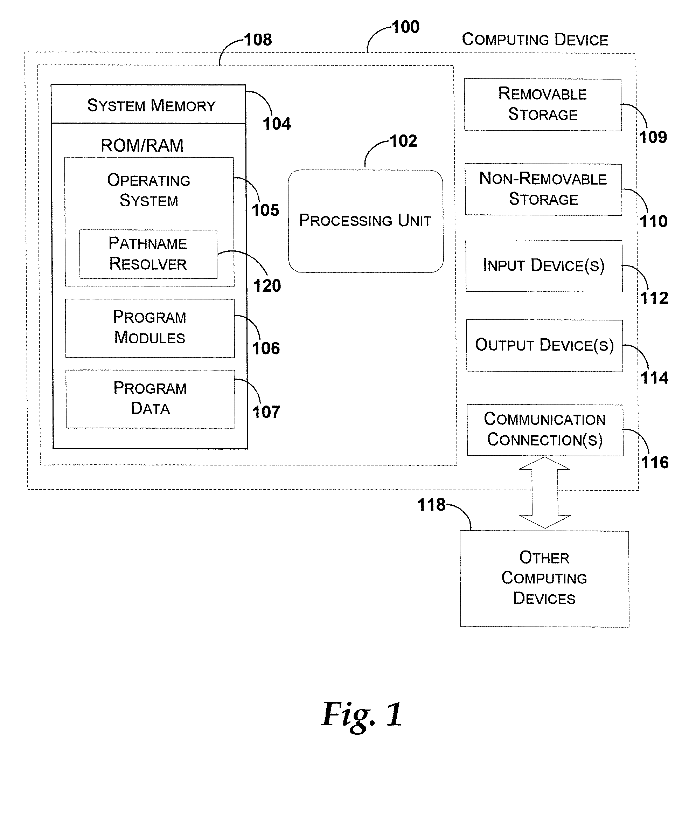

With reference to FIGURE 1, one exemplary system for implementing the invention includes a computing device, such as computing device **100**. In a very basic configuration, computing device **100** typically includes at least one processing unit **102** and system memory **104**. Depending on the exact configuration and type of computing device, system memory **104** may be volatile (such as RAM), non-volatile (such as ROM, flash memory, etc.) or some combination of the two. System memory **104** typically includes an operating system **105**, one or more program modules **106**, and may include program data **107**. The operating system **105** can further include a pathname resolver **120** according to the present invention. This basic configuration is illustrated in FIGURE 1 by those components within dashed line **108**.

Computing device **100** may have additional features or functionality. For example, computing device **100** may also include additional data storage devices (removable and/or non-removable) such as, for example, magnetic disks, optical disks, or tape. Such additional storage is illustrated in FIGURE 1 by removable storage **109** and non-removable storage **110**. Computer storage media may include volatile and nonvolatile, removable and non-removable media implemented in any method or technology for storage of information, such as computer readable instructions, data structures, program modules, or other data. System memory **104**, removable storage **109** and non-removable storage **110** are all examples of computer storage media. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by computing device **100**. Any such computer storage media may be part of device **100**. Computing device **100** may also have input device(s) **112** such as keyboard, mouse, pen, voice input device, touch input device, etc. Output device(s) **114** such as a display, speakers, printer, etc. may also be included. These devices are well know in the art and need not be discussed at length here.

Computing device **100** may also contain communication connections **116** that allow the device to communicate with other computing devices **118**, such as over a network. Communication connection **116** is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer readable media as used herein includes both storage media and communication media.

### Structure of Pathname Resolver

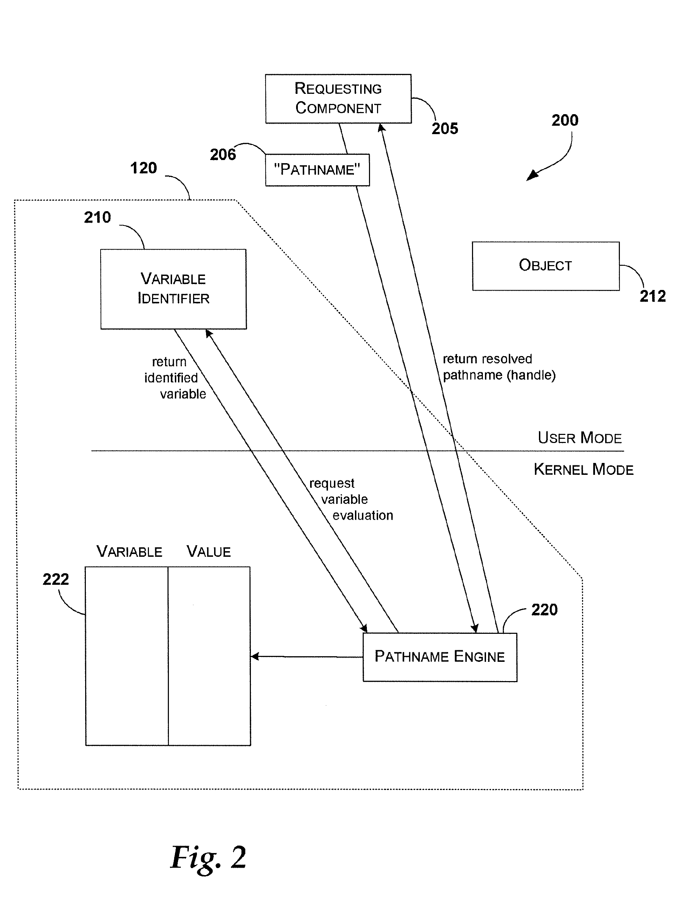

With reference to FIGURE 2, a block diagram illustrating an exemplary environment for practicing the present invention is shown. The exemplary environment shown in FIGURE 2 is a path/link subsystem environment **200** for a file system that includes pathname resolver **120** according to the present invention. The environment includes a requesting component **205**, which may be any component that requests access to an object (e.g., object **212**) by a pathname **206**. For example, the requesting component **205** may be any one or more of the following: embedded paths or uniform resource locators (URLs) in an e-mail message; and paths having variables included in scripts.

In this embodiment, the pathname **206** used to refer to the object **212** includes a variable. For instance, one example of such a pathname may be "\\server\share\@user\phonelist.doc". In this example, the term "user" is identified as a variable through the use of the "@" character. Other characters may also be used.

Pathname resolver **120** includes variable identifier **210**, pathname engine **220**, and data structure **222**. In this particular implementation, the variable identifier **210** operates in user mode, and the pathname engine **220** and data structure reside in kernel mode. Pathname engine **220** is responsive to requesting component **205** and requests variable evaluation from variable identifier **210**. Alternatively, requesting component **205** communicates directly with variable identifier **210** to request variable evaluation.

The variable identifier **210** identifies the variable in the pathname **206**. In this particular implementation, the variable is identified by locating a unique prefix in the pathname **206**, the "@" character in this example. The unique prefix could be any combination of one or more characters. Variable identifier **210** returns the identified variable to the pathname engine **220**.

The pathname engine **220** evaluates the variable by referring to the data structure **222**. The data structure **222** stores a number of variable names mapped to corresponding values. The values may be character strings, or may be a reference point to arbitrary executable code that results in a string. The pathname engine **220** searches for the variable in the data structure **222**. A corresponding value will only be found if a value has been stored in data structure **222**, thus each variable has a well-defined scope of values because the only values available are the values stored in the data structure **222**. If the variable does not exist in the data structure **222**, the pathname is identified as a character string rather than a pathname including a variable. This allows legal characters to be used as the prefix that identifies variables. Alternatively, illegal characters could be used to identify variables, in which case if a variable did not exist in the data structure **222**, an error could be returned.

If a proper value for the variable exists in the data structure **222**, that value is returned to the variable identifier **210**. The variable identifier **210** may then modify the pathname **206** provided by the requesting component **205** by replacing the variable with the value of the variable. In this way, the modified pathname points to the object **212.** The variable identifier may then request that the modified pathname be resolved into a handle for the object **212** and return that handle to the requesting component **205**.

In one embodiment, the data structure **222** may be unique to each user such that a different user has a different set of variable/value mappings. This allows a textually-identical pathname (including a variable) to map to different objects based on which user is logged on. For example, if a variable such as "@username" is used in a dynamic pathname, that variable would evaluate to a different value based on which user were logged on to the computing system. In another example, a variable such as "@L-146" may refer to an office location. That variable may be used in a pathname that identifies a printer within that office, but which has a named based on the current occupant of the office. Accordingly, a data structure **222** may include a table that maps the office location variable to a username of the current occupant of that office. Many other alternatives will also become apparent to those skilled in the art.

In this implementation, any privileged application could write values and/or variables to the data structure **222**, thus making this mechanism extensible. Alternatively, the data structure **222** could be fixed in size with a finite number of values such that values cannot be added arbitrarily. Unique variables could be defined in data structure **222** having a scope of potential values determined by the requirements of file system **200**.

The values corresponding to the variable can be defined in many ways. For example, the values can be user-defined or the values can be context specific (e.g., the values can be defined by the state of the operating system or environment). Some basic values can be provided that are widely used such as values corresponding to a variable defined as "user."

### Process for Late-Binding/Dynamic Pathname Resolution

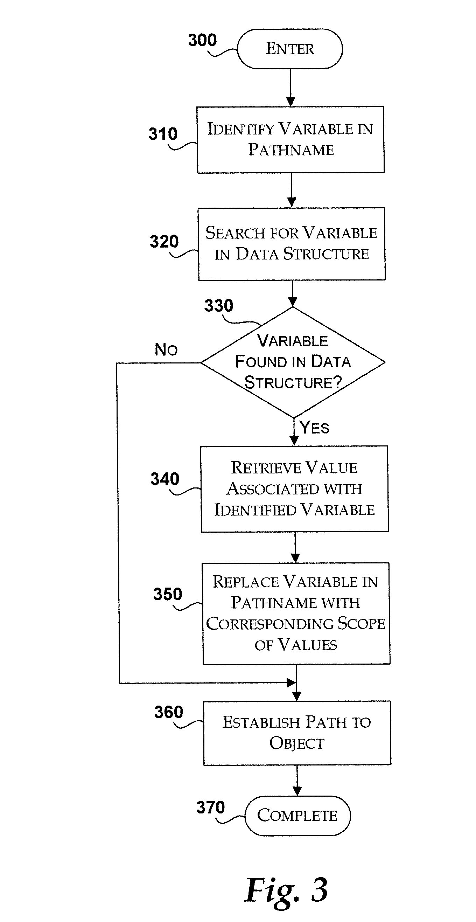

With reference to FIGURE 3, a logical flow diagram of an exemplary overview of the pathname resolution process performed in accordance with the present invention is shown. The process enters at starting block **300**, where a requesting component has requested access to an object identified by a pathname. The process continues at block **310**.

At block **310**, a variable is identified in the pathname. The variable can be identified by parsing the pathname into its constituent parts and searching for a unique prefix character, e.g. "@". If a variable is found the process continues at block **320**.

At block **320**, a search is performed for the variable in a data structure, such as a table with variable/value mappings. At decision block **330**, a determination is made whether an entry for the variable is found in the data structure. If the variable is found in the data structure, the process proceeds to block **340**. If the variable is not found in the data structure, the process proceeds to block **360** where the variable is treated as a character string not requiring resolution.

At block **340**, the value associated with the variable is retrieved from the data structure and the process proceeds to block **350**. At block **350**, the variable in the pathname is replaced with the corresponding value to form the complete pathname, and the process proceeds to block **360**. At block **360**, the complete pathname is returned to the requesting component. The process proceeds to block **370** where the pathname resolution is complete.

### Process for Adding Variable/Value Pair to Data Structure

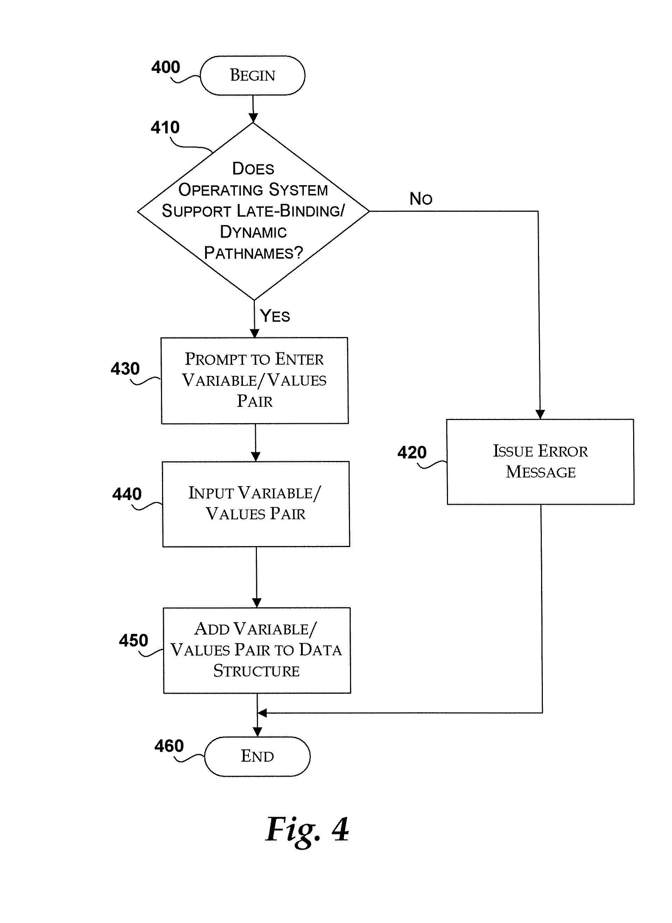

With reference to FIGURE 4, a logical flow diagram of an exemplary process for expanding the data structure performed in accordance with the present invention is shown. The data structure can be expanded by adding new variable/values pairs.

The process begins at block **400** where a system administrator decides to include more variables and/or corresponding values to the data structure. At decision block **410**, a determination is made whether the operating system supports late-binding/dynamic pathnames. If the operating system supports late-binding/dynamic pathnames, the process proceeds to block **430**. If the operating system does not support late-binding/dynamic pathnames, the process proceeds to block **420**. At block **420**, an error message is issued informing the system administrator that the operating system does not support late-binding/dynamic pathnames, and the process proceeds to block **460**.

At block **430**, the system administrator is prompted to enter a variable/value pair. The process proceeds to block **440**. At block **440**, the system administrator inputs a variable/value pair into the system. The process proceeds to block **450**. At block **450**, the variable/value pair is added to the data structure. The process ends at block **460**.

It will be appreciated that adding variable/value pairs to data structures in accordance with the invention may also be performed by script, such as at user logon. In addition, policies may be set that include pre-defined variable/value mappings. Likewise, a software component having sufficient permissions to alter a data structure in protected mode may directly access and modify variable/value mappings in the data structure. In this way, variable/value mappings may be created that are resolved in the context of a particular user, particular hardware or software on which the several components execute, or based on some other criteria.

The above specification, examples and data provide a complete description of the manufacture and use of the composition of the invention. Since many embodiments of the invention can be made without departing from the spirit and scope of the invention, the invention resides in the claims hereinafter appended.

## Claims

1. A computer-readable medium, having computer-executable components, comprising:
a data structure including variable/value mappings;
a pathname resolver configured to identify a variable in a pathname, to retrieve from the data structure a value associated with the identified variable, and to modify the pathname such that the variable is replaced with the value from the data structure.

2. The computer-readable medium of claim 1, wherein the pathname resolver comprises a variable identifier that is configured to identify the variable in the pathname.

3. The computer-readable medium of claim 1, wherein the pathname resolver comprises a pathname engine that is configured to identify the variable by performing the following steps:
searching for the variable in the data structure;
accessing the corresponding value; and
inserting the value in place of the variable in the pathname such that the path identifies the location of an object.

4. The computer-readable medium of claim 1, wherein the data structure is implemented in a kernel mode of an operating system.

5. The computer-readable medium of claim 1, wherein variable/value pairs are defined in the data structure by a user.

6. The computer-readable medium of claim 1, wherein variable/value pairs are defined in the data structure by a context in which the computer-readable medium operates.

7. A computer-readable medium having computer-executable instructions comprising:
receiving a pathname that includes a variable;
resolving the pathname by mapping the variable to a corresponding value in a data structure;
returning a handle to an object pointed to by the resolved pathname; and
expanding the data structure by adding variable/value pairs to the data structure.

8. The computer-readable medium having computer-executable instructions of claim 7, further comprising identifying the variable in the pathname.

9. The computer-readable medium having computer-executable instructions of claim 8, further comprising searching for the variable in a data structure implemented in the kernel of an operating system.

10. The computer-readable medium having computer-executable instructions of claim 9, further comprising inserting the value corresponding to the variable in place of the variable in the pathname.

11. A computer-readable medium encoded with an extensible data structure comprising:
a first field including an identification of a variable included in a pathname; and
a second field including a value for the variable, the pathname including the value being operable to point to an object.

12. The computer-readable medium encoded with an extensible data structure of claim 11, wherein the data structure is stored in the kernel of an operating system.

13. The computer-readable medium encoded with an extensible data structure of claim 11, wherein the data structure is expandable by adding variable/value pairs.

14. A computer-implemented method, comprising:
identifying a variable in a pathname provided by a component requesting access to an object;
mapping the variable to a corresponding value in a data structure;
modifying the pathname by replacing the variable in the pathname with the corresponding value such that the resolved pathname creates a path that points to the object; and
returning to the requesting component the modified pathname.

15. The computer-implemented method of claim 14, further comprising receiving a pathname that includes a variable.

16. The computer-implemented method for resolving a pathname of claim 14, further comprising searching for the variable in the data structure implemented in the kernel of an operating system.

17. A computer-readable medium with computer-executable instructions for performing the method of claim 14.
